# EUROPEAN PATENT APPLICATION

(11) **EP 2 827 589 A1**
(43) Date of publication of application: **21.01.2015**
(21) Application number: 13306007.9
(22) Date of filing: 15.07.2013
(51) Int. Cl.: H04N 9/31, G09F 19/18, H04N 7/14

(54) **Display device and device for adapting an information**

(71) Applicant: Thomson Licensing, 92130 Issy-les-Moulineaux (FR)
(72) Inventor: Blonde, Laurent, 35576 Cesson-Sévigné (FR); Schubert, Arno, 35576 Cesson-Sévigné (FR); Drazic, Valter, 35576 Cesson-Sévigné (FR); Redmann, William Gibbens, Burbank, CA California 91505 (US)
(74) Representative: Perrot, Sébastien

(57) **Abstract**

The present invention is related to a display device comprising a curved surface display (100). Such device is remarkable in that it comprises coupling means (105) enabling to couple said display device to at least one output of a projector device (102), said coupling means receiving, from said at least one output, at least one light beam of information to be displayed, said information to be displayed being adapted to a geometry of said curved surface display, and in that it comprises optical means (104) enabling to guide said at least one light beam to said curved surface display.

## Description

### Field of the invention

The invention relates to videophony. More precisely, the invention aims to provide a way to enhance the interactions between people using videophony.

### Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Nowadays, it is quite common that radiocommunication devices (such as smartphone, etc.) comprise a camera or movie camera in addition to classical radiocommunication or interaction features (such as a screen, a touch panel and so on). Hence, videophony is becoming more and more used by people due to the widespread use of these devices. Indeed, the calling party and the called party can now see the faces of each other on the screens of such radiocommunication devices, and therefore it allows to enhance nonverbal communication associated with the facial features like in a real discussion were people face together. However, such devices only allow the visualization of two dimensional content. In order to obtain a three dimensional representation of the face of a person, it could be possible to use auto-stereoscopy techniques as disclosed for example in the document entitled *"*A Prototype 3D Mobile PhoneEquipped with a Next Generation Autostereoscopic Display" by J. Flack et al., published in the conference SPIE 2007 (which stands for *"Stereoscopic Displays and Virtual Reality Systems 2007"*), or in the document entitled *"*Stereoscopic imaging and display for a 3-D mobile phone" by Min-Chul Park et al., published in Applied Optics, Vol. 48, Issue 34, pp. H238-H243 (2009). However, the videophony based on the stereoscopy techniques mentioned previously does not give an accurate visualization of a face. Moreover, such "three dimensional" mobile phones are quite expensive due to the technologies involved in the manufacturing of such devices. The present invention aims to solve these problems. More precisely, it is an aim of the invention to provide a more realistic visualization of the face of a calling party or a called party (from the volume point of view) during a call through a radiocommunication device (such as a mobile phone, a tablet computer, etc.).

### Summary of the invention

The present invention is directed to a display device comprising a curved surface display. According to the invention, the display device comprises coupling means enabling to couple the display device to at least one output of a projector device, the coupling means receiving, from the at least one output, at least one light beam of information to be displayed, the information to be displayed being adapted to a geometry of the curved surface display, and in the display device comprises optical means enabling to guide the at least one light beam to the curved surface display.

The combination of the coupling means and the optical means is the following: the coupling means enable to join the at least one output to the display device. Therefore, all the beam of light generated from the at least one output of the projector are transmitted to the optical means without a loss of information and/or perturbation from the environment of said beams (moreover, in case of movement of the projector device, it is not necessary to verify that the projector and the display device are still in a good position enabling a correct display). Then, said optical means enable to transmit said beam of light to its destination (i.e. said curved surface display). As the beam of light conveys an information adapted to said geometry of said curved surface display, it is not necessary to distort/deform said beam of light.

In one embodiment of the invention, such coupling means comprise magnetic elements that enable to strengthen the connexion between said coupling means and said at least one output to said display device.

In a preferred embodiment, the display device comprises geometry data associated to said geometry of said curved surface display.

In a preferred embodiment, such display device is remarkable in that it comprises a memory unit in which said geometry data is stored.

In a preferred embodiment, such display device is remarkable in that it comprises a barcode in which said geometry data is stored, or such barcode can give an access to said geometry data in a database.

In a preferred embodiment, the curved surface display has a shape of a human face.

In another embodiment, such display device is remarkable in that said curved surface display has an ellipsoid shape.

In a preferred embodiment, the optical means comprise a mirror.

In one embodiment, such mirror can be a spherical mirror.

In a preferred embodiment, the said optical means further comprise a lens.

In one embodiment, such lens can be an aspheric lens that enables to reduce or eliminate spherical aberrations and also to reduce other optical aberrations for the projection geometry onto the curved surface.

The combination of a mirror and a lens enable to obtain a better stigmatism.

In a preferred embodiment, such display device is remarkable in that said lens is positioned at an output of said coupling means.

In a preferred embodiment, the curved display surface is translucent.

In a preferred embodiment, the translucent curved surface display has light scattering properties.

In a preferred embodiment, such display device is remarkable in that said light scattering properties are close to properties of light scattering of human skin.

In a preferred embodiment, the information to be displayed represents a face of a human being.

In another embodiment, such information to be displayed representing a face of a human being is obtained through the combination of at least two images (or frames) of the same face viewed from two different angles. Therefore, the display of such combination of images extends the laterally observed field, which gives a wider view of a face.

In a preferred embodiment, the coupling means comprise a mechanical linkage enabling a movement of said display device with regards to said projector device.

In a preferred embodiment, said mechanical linkage corresponds to a ball and socket joint.

In one embodiment, the control of such mechanical linkage is performed by a dedicated motor.

In such embodiment, the dedicated motor is a micro motor. In another embodiment, such mechanical linkage is based on MEMS (for *"Microelectromechanical systems"*)*.*

In a preferred embodiment, such display device is remarkable in that said movement is a spatial rotation.

In a preferred embodiment, the coupling means comprise at least one deflecting prism.

In another embodiment, said coupling means comprise Risley prism pair, or wedge prism pair. Prisms enable to deflect said beam of light by a fixed angle. A pair of such prisms can be used for beam steering. Moreover, by rotating the prisms, the beam can be deflected into any desired angle within a conical "field of regard". One skilled in the art could adapt the technique disclosed in the document *"*Risley-Prism Based Compact Laser Beam Steering for IRCM, Laser Communications, and Laser Radar" by C. Schwarze et al. details to use it in the coupling means.

In a preferred embodiment, such display device is remarkable in that said movement of said display device compared to said projector device is correlated to an information of movement associated to said information to be displayed.

In a preferred embodiment, such display device is remarkable in that a distance between said coupling means and said optical means is around 25 to 75 mm.

In another embodiment, such display device can be coupled to several outputs of a projector device that deliver beams of lights corresponding to images (or frames) of a same scene from different points of view. Such feature enables to extend the observed field laterally in the case that the curved surface display is a face mask. Indeed, it enables to obtain a larger face map, that better covers the lateral parts of the face mask.

In another embodiment, such display device can be couple to outputs of several projectors devices that deliver beam of lights corresponding to images of a same scene from different points of view. Such feature enables to extend the observed field laterally in the case that the curved surface display is a face mask. Indeed, it enables to obtain a larger face map, covering better the lateral parts of the face.

In another embodiment, said curved surface display is made in plastic, and said curved surface display is removable/detachable from said display device. Hence, it is possible to select the curved surface display among various options. The user can therefore adapt the curved surface display according to his mood. In such embodiment, attachment means enable to assemble or remove said curved surface display.

In one embodiment, said curved surface display is concave.

In one embodiment, said curved surface display is convex.

In one embodiment of the invention, said curved surface is a multi-faceted surface.

In one embodiment, said information on geometry of said curved surface display can comprise the dimensions and/or the form of the curved surface display, as well as information related to the dimensions (size, configuration) of the optical means of the display device, directly obtained from an external device.

In another embodiment of the invention, said information on geometry of said curved surface display can be less accurate. Indeed, just an estimation of the dimension (only the size) of the curved surface display can be obtained through a manipulation of the user that zooms in or out the output of the picoprojector until when he considers that the projected information on the display device matches (more or less) the curved surface display. The obtention of information by this way implies the presence of a person in order to adjust the size of the displayed content/information.

The invention concerns also a device for adapting an information into an information to be displayed on a display device according to any embodiment of the display device, said device for adapting comprising:
- means for obtaining an information of a geometry of said curved surface display;
- means for applying a geometric morphing to said information in function of said information on geometry, delivering an adapted information to be displayed.

In a preferred embodiment, such device is remarkable in that said means for obtaining comprise means for reading a memory unit comprised in said display device.

In a preferred embodiment, the means for obtaining comprise means for reading a barcode associated to said display device.

In a preferred embodiment, the device for adapting comprises:
- means for detecting at least one feature point on the information delivering an at least one detected feature point;
means for moving a display position of the at least one detected feature point to an expected position where the at least one detected feature must be displayed, the means delivering said information of a geometry of the curved surface display.

The invention also concerns a method for displaying data on a curved surface display. Such method is remarkable in that it comprises:
- a step of obtaining at least one frame (or picture, or image (in 2 dimensions)) corresponding to a face of a person;
- a step of applying a geometric morphing to said at least one frame in function of an information of geometry of said curved surface display, delivering at least one adapted frame to be displayed;
- a step of displaying said adapted frame onto the curved surface.

In another embodiment, the information of geometry of said curved surface display used in such method is obtained through the execution of a step of reading a memory or a bar code comprising such information. In that case, the exact configuration of the curved surface display can be obtained.

In another embodiment, the information of geometry of said curved surface display used in such method is obtained through the execution of a step of setting up an input.

In another embodiment, the step of applying a geometric morphing to said at least one frame comprises a step of normalizing said at least one frame, delivering a normalized frame, on which said geometric morphing is applied. More precisely, such step of normalizing comprises a step of extracting at least one front facial feature from said at least one frame. Then, the position of said at least one front facial feature is compared with an equivalent one in a reference image (or frame). By taking into account the result of the comparison, said at least one frame is modified in such way that a match occurs between the position of said at least one front facial feature and the equivalent in said reference image.

In one embodiment of the invention, said at least one front facial feature is an invariant feature. More precisely, such invariant feature can be either the distance between left and right iris centers, or the distance between two inner eye points, or the distance between two outer eye points, or the distance form horizontal eye-line (mid point of distance between two iris centers) to nose tip.

In one embodiment of the invention, said at least one front facial feature belongs to a group comprising: an eye, an eyebrow, and eye point, a nose, a mouth, a chin, an ear.

In another embodiment of the invention, said step of normalizing comprises a step of decomposing said at least one frame into a set of eigenfaces, and a step of comparing said set of eigenfaces with other sets of eigenfaces stored within a storage unit. In case of detection of a matching, said step of displaying further displays a name associated to said person.

In another embodiment of the invention, in the case that several camera can capture images of a person from different points of view, it is possible to use the technique described in the document *"*Head Modeling from Pictures and Morphing in 3D with Image Metamorphosis based on triangulation" by W. Lee et al., published in CAPTECH 98 or in the document *"*Reconstructing head models from photographs for individualized 3D-audio processing" by M. Dellepiane et al., published in the proceedings of the conference Pacific Graphic in 2008.

### Brief description of the figures

The above and other aspects of the invention will become more apparent by the following detailed description of exemplary embodiments thereof with reference to the attached drawings in which:
Figure 1(a) to Figure 1(d) represent differents views of a communication device comprising a projector device (such as a picoprojector device) which is connected to a display device according to one embodiment of the invention;
Figure 2 presents a display device according to another embodiment of the invention with a concave display surface;
Figure 3 presents a flowchart of a calibration method of the display according to one embodiment of the invention;
Figure 4 presents some widgets which are displayed on the control panel of a communication device and that are involved in the calibration process disclosed in the Figure 3;
Figure 5 presents a flowchart of the main steps that are used to obtain, at the output of the projector device, the light beams adapted to the surface of display in the context of a static display device compared to the projector device ;
Figure 6(a) to Figure 6(c) presents a display device according to another embodiment of the invention, which comprises articulated (or flexible) coupling means;
Figure 7 presents a flowchart of the main steps that are used to obtain, at the output of the projector device, the light beam adapted to the surface of display in the context of an articulated display device compared to the projector device ;
Figure 8 presents a communication device comprising a picoprojector device which is connected to a display device according to one embodiment of the invention;
Figure 9 presents a device that can be used to perform one or several steps of the flowcharts of the Figures 3, 5 and 7.

### Detailed description

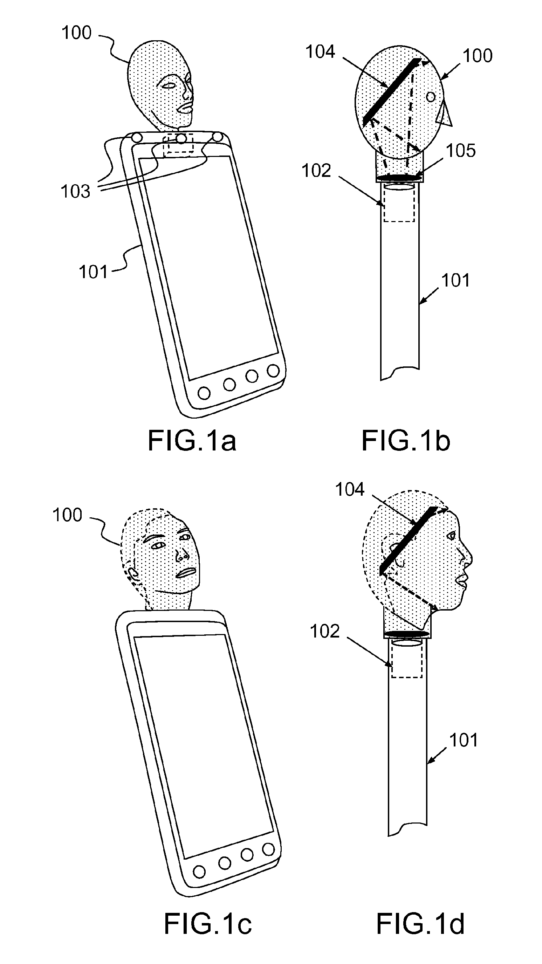

Figure 1(a) to Figure 1(d) represent different views of a communication device comprising a projector device (as a picoprojector device) which is connected (or coupled) to a display device according to one embodiment of the invention.

More precisely, the display device, referenced 100, corresponds to a translucent head shaped bulb. Such display device 100 comprises coupling means that enable to fix or couple said display device 100 to the output of the picoprojector device, referenced 102, comprised within a communication device referenced 101. Close to said coupling means (or integrated to such means in one embodiment), a lens referenced 105 is positioned in order to receive the beam of light emitted by said picoprojector. Then, the beams of light modified by said lens 105 are directed to a mirror referenced 104 comprised within said display device 100. Such mirror 104 can guide the received beam of light from the lens 105 to the curved surface display which corresponds to a convex face mask. Such face mask can comprise for example some face features such as the location of the eyes, the mouth, and so on, drawn or embossed (subtly). In one embodiment, such face mask can represent the facial characteristic of an actual person. The set comprising the lens 105 and the mirror 104 can be viewed as optical means in the sense of the invention. The camera referenced 103 comprised within the communication device 101 enables taking either pictures (or images, or frames), or movies (which can be viewed as a sequence of pictures or frames) of the user of such communication device 101. By the use of such display device 100, in combination with a dedicated component (i.e. a device for adapting an image or frame) that can be inside the communication device (or in a part of a network that is linked to said communication device), such user can see the face of an incoming caller displayed via the display device 100, giving him the impression of the real presence of the calling party. More precisely, in such embodiment, the features of the face of the calling party match with the features of the mask. Moreover, when the calling party is speaking, the sequence of images (or frames) is displayed by the display device 100. Therefore, it gives the called party the impression that the calling party is facing him, and is speaking to him.
Figure 1(a) presents a perspective view of the communication device 101 coupled with the display device 100. In the figure 1(a), the projector device is turned off, and no information is displayed by the display device 100.
Figure 1(b) presents a side view of the communication device 101 coupled with the display device 100. In the figure 1(b), some internal features of the display device 100 and the communication device are presented.
Figure 1(c) presents a perspective view of the communication device 101 coupled with the display device 100. In the figure 1(c), the projector device is turned on, and information is displayed by the display device 100. Indeed, the face of the calling party is displayed by the display device 100.
Figure 1(d) presents a side view of the communication device 101 coupled with the display device 100, when the projector device is turned on and is emitting beams of light as in the figure 1(c).

In one embodiment of the invention, the projector device is a laser video projector or a micro laser projection comprising an optical fiber which couples laser illumination to light modulator that can deliver beams of light in order to obtain an image (see for example the document *"*Photonic Devices for Imaging, Display, and Storage" by Harley R. Myler from University of Central Florida).

In another embodiment of the invention, when the called party receives an incoming call, and before he takes the call, an additional information (such as the picture of the face of the calling party) is provided to the communication device 101. Then, a feature extraction can be done on that received picture (such as a decomposition of said received image into a set of eigenfaces), and a comparison with images comprised in a directory of contacts (stored in a memory in the communication device) is performed. In case of the detection of the presence of such contact in the directory, a name or image can be displayed (either on the panel of the communication device 101, or in a part of the display device 100). Hence, even if the calling party uses the communication device of an unknown person, it could be possible to obtain the name/identity of the calling party (if he is a friend, or a family member). In another embodiment, the combination of such display device 100 with a communication device 101 enables to solve a different issue. Indeed, the called party is able to display the face of the calling party before taking the incoming call. Hence, if a communication device uses a masking phone number technique, and that one of the friend of the called party uses an unknown communication device, it is still possible to take the call whatever he uses a masked number or not.

In another embodiment, such communication device can be a tablet computer, a mobile phone, a mobile computer or another electronic. In another embodiment, such communication device can comprise Wi-Fi features (or equivalent features) enabling an access to Internet, or it can also comprise a radio communication unit (such as a 3G, or a 4G, or LTE module).

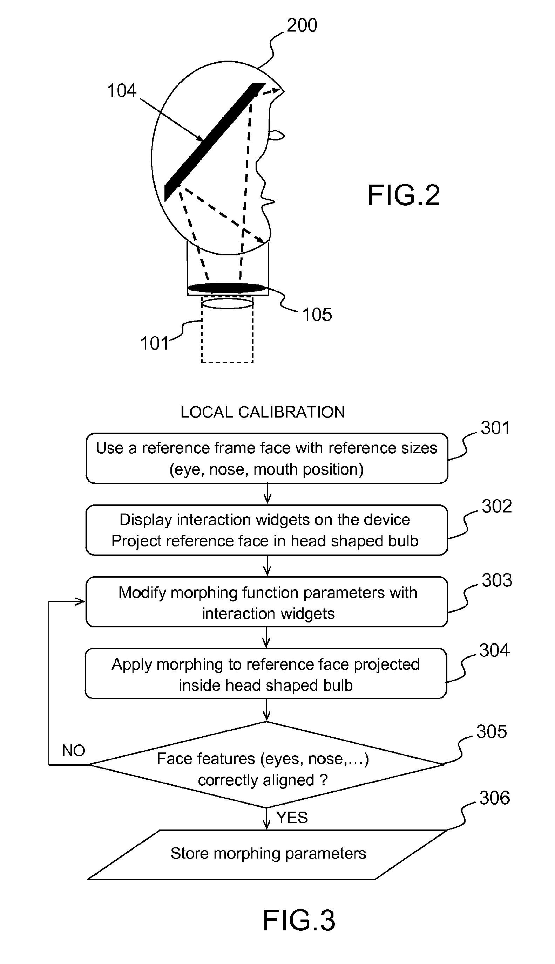

Figure 2 presents a display device according to another embodiment of the invention with a concave surface display. More precisely, instead of having a convex surface display as in the figure 1, the display device of the figure 2, referenced 200, has a concave surface display. Due to the hollow-face illusion (also known as hollow-mask illusion), the face of the calling party will appear to be a three dimensional convex face, even though it is actually concave and, misleading his visual system, the called party will have the impression the face follows his movements, even if actually static.

Figure 3 presents a flowchart of a calibration method that should be executed in order to obtain a display of a face as depicted in Figure 1, according to one embodiment of the invention.

More precisely, when a user of a communication device wants to use a display device 100, and no information related to the dimension of the display device 100 is available (such as the geometry of the curved surface display, and/or the dimension of the optical means comprised within the display device 100), the user can apply a calibration method, that is a local calibration in the sense that it is performed locally by the user of the communication device 101. Such calibration method comprises a step referenced 301 comprising the obtaining of a reference frame/picture of a person. Such reference frame corresponds to a frame with a particular size and/or format. In one embodiment, such format corresponds to a 720 x 480 pixels format, in which a front view of a face is available. In another embodiment, such reference frame can be a mosaic frame as depicted in the article: *"*Unwrap Mosaics: A new representation for editing" by A. Rav-Acha et al., published at the conference SIGGRAPH 2008. Some invariant face front facial features or just the position of some features in such frame/ picture are detected and associated to widgets that are displayed to a panel of the communication device in a step referenced 302. Then, a projection of the reference frame is done onto the curved surface display of the display device 100. In order to adjust the position of the features onto such curved surface display, a user can use a zoom in/out feature in order to choose an appropriate projection that fits (precisely or approximately) to the curved surface display, and then he can act on one or several widgets, and such actions induce a modification of the projection of the reference image. Such interaction with the widgets, performed in a step referenced 303, induces a modification of parameters that will be used in a morphing function that should be applied to the reference image in order to deform it in such a way it moves the position of the features that are associated to the widgets. Then, a morphing step is performed, during a step referenced 304, to the reference frame by taking into account the modified parameters. Hence, the action of the zoom combined with the use of the widgets provides indirectly information on the geometry of said curved surface display. If the features are aligned with the elements of the curved surface display, then the user validates the choice of the value of the parameters and these values are stored within a memory of the communication device, during a step referenced 306. Otherwise, if the user doesn't validate the choice of the value, he can still modify them by performing again the step 303 and the other ones.

In addition, luminance levels may be also locally adjusted to correct local attenuation due to the projection in the head shape bulb 100, and to increase luminance/color naturalness of the resulting image. Therefore, a similar flowchart as the one of the figure 3 can be established but with parameters being related to calibration and determination of the luminance/color parameters.

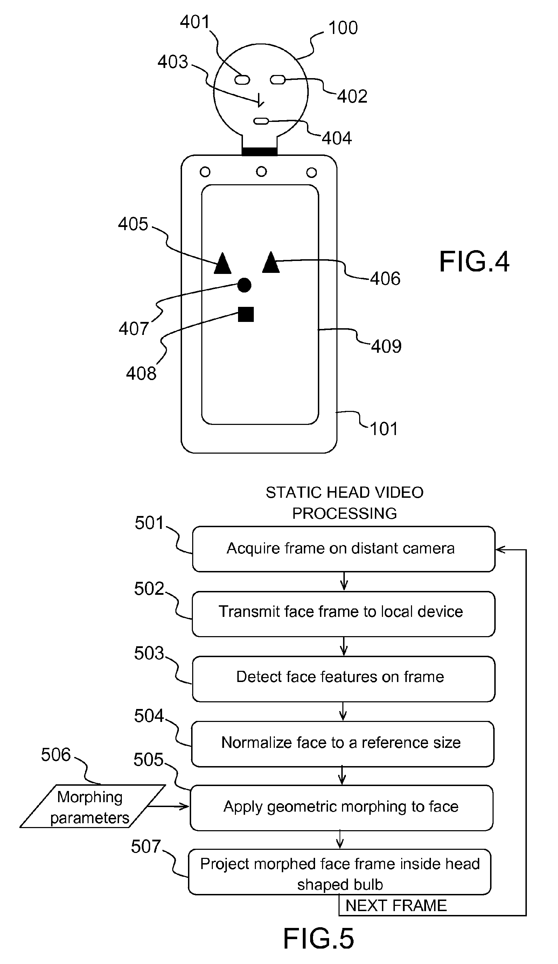

In one embodiment, a widget can be for example a small circle (or whatever element as for example the one disclosed in the figure 4) associated to a specific feature of the face that can be moved by using a touch panel 409 of a communication device 101. For example a circle can be associated to one eye, and another circle to another eye.

In one embodiment, if the geometry of said curved surface display is known, such calibration method is not mandatory. Indeed, in that case, morphing parameters can be derived from the known geometry.

In another embodiment, the use of the calibration method and the use of the geometry of the curved surface are combined in order to define the morphing parameters.

Figure 4 presents some widgets which are displayed on the control panel of a communication device and that are involved in the calibration process disclosed in the figure 3. More precisely, the curved surface display of the display device 100 which comprises some features referenced 401, 402, 403 and 404 which are respectively a first eye position, a second eye position, a nose position and a mouth position. The widget referenced 405, 406, 407 and 408 corresponds to respectively a first eye position in a reference image, a second eye position in a reference image, the nose position in a reference image and the mouth position in a reference image. The user can manipulate through the panel 409 of the communication device 101, each of the widget 405, 406, 407 and 408. The displacement of such widget induces a modification of the place of projection in the curved surface display.

Figure 5 presents a flowchart of the main steps that are used to obtain, at the output of the projector device, light beams adapted to the surface of display 100 in the context of a display device static with respect to the projector device. Such flowchart comprises the following steps : - a step , referenced 501, comprising the acquisition of a frame on a distant device (i.e. an image or picture is obtained for example through a camera of the incoming caller); - a step referenced 502 comprising the transmission of the face frame (i.e. the picture of the incoming caller) to a local device (for example, such device can be located in the communication device); - a step, referenced 503, comprising the detection of face features on the received frame; -a step, referenced 504, comprising a normalization of the face to a reference. Such step 504 modifies the content of the received frame in such way that dimension of the frame is matched to a reference frame (such normalization can be viewed as a morphing function); - a step, referenced 505, of applying a geometric morphing to the normalized face frame in function of the values of some morphing parameters obtained through the execution of a step referenced 506. Such morphing parameters can be obtained either after the execution of a calibration method as depicted in the figure 3, or they can be derived from an information (linked to the geometry of the curved surface display, or to the characteristics of the optical means) that is stored on the display device 100 itself (via the use of a barcode, or stored in a memory unit), or from a combination of the calibration method and the previously mentioned information; and - a step, referenced 507, comprising a projection the morphed face frame onto the curved surface display.

In one embodiment, such process is being executed for each of the frames that have to be displayed on the curved surface display.

In another embodiment, steps 503 to 505 can be gathered into one step, from a mathematical point of view.

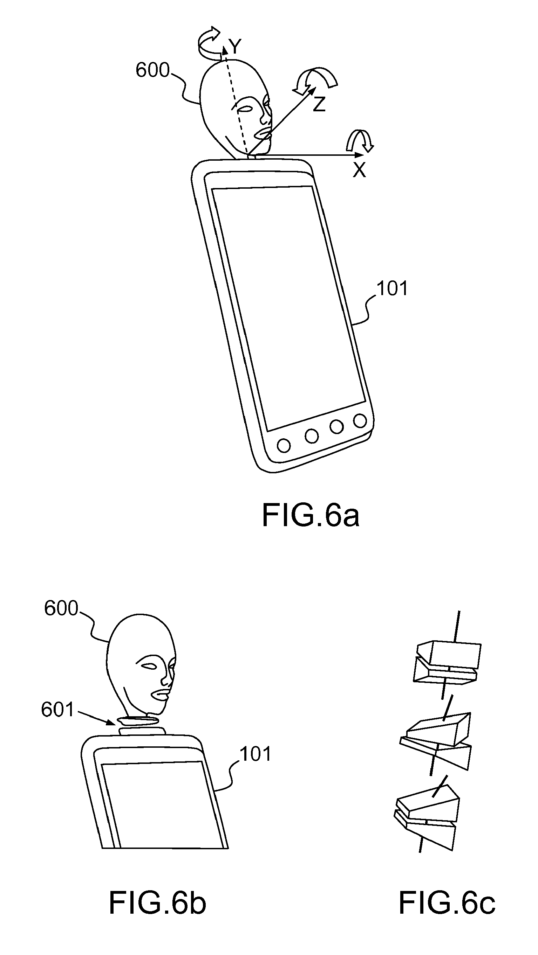

Figure 6(a) to Figure 6(c) present a display device according to another embodiment of the invention, which comprises mobile coupling means.

More precisely, the coupling means comprise a mechanical linkage, referenced 601, enabling a movement of the display device, referenced 600 , with regards to the output of the projector device 105 comprised in the communication device 101. Such mechanical linkage 601 corresponds to a ball and socket joint, but others mechanical linkages can be used. As in the figure 1, the display device 600 comprises a mirror 104, as well as lens 105. But, in addition, such display device 600 comprises, in the mechanical linkage, deflecting means that enable to guide the beams of light to the mirror 104. As depicted in the figure 6(c), such deflecting means can be a Risley prism pair.

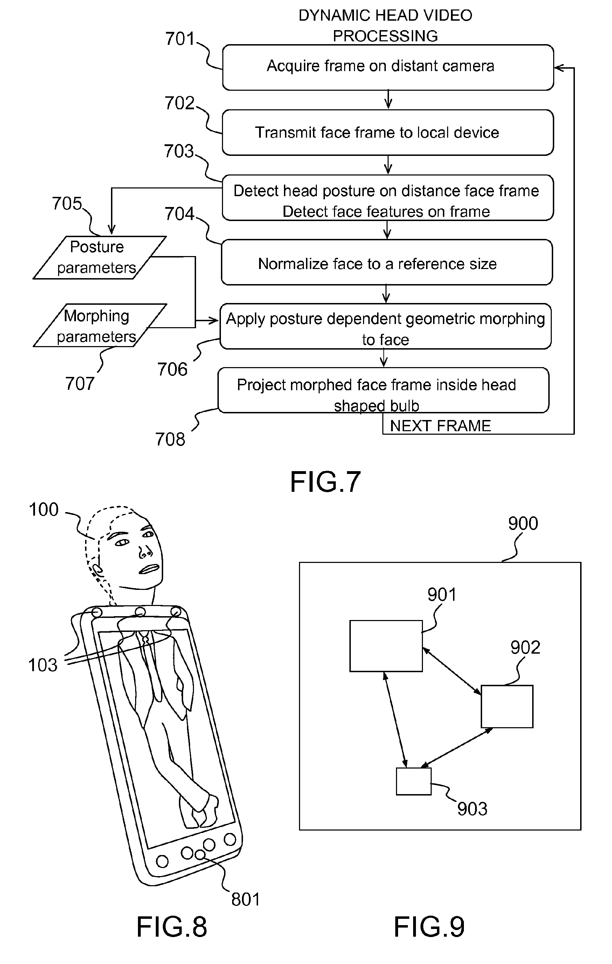

Therefore, such mechanical linkage enables to animate the display device. More precisely, the display device can reproduce the head movement of the calling party, such as for example a nodding, or a tilting. The motion of the calling party is captured and replicated through the display device by using for example the method disclosed in the Figure 7.

Figure 7 presents a flowchart of the main steps that are used to obtain, at the output of the projector device, the light beams adapted to a curved surface display in the context of an articulated display device with regards to the projector device.

In a step referenced 701 (similar to step 501), a frame or picture of a user is obtained (through the use of a camera embedded for example in a communication device). Then, such a frame is transmitted, in a step referenced 702, to the communication device of a person, such communication device being coupled with a display device according to the invention. The step 702 is also similar to the step 502. Such a communication device comprises a device for adapting the received frame in order to be displayed correctly to the display device. In one embodiment, such a device for adapting can detect, in a step referenced 703, the head posture compared to a reference face frame in order to determine the value of some posture parameters (the value of these parameters is stored in a step referenced 705). The determination of the posture can be determined by taking into account the detection of specific features of a face (such as the eyes, the eyebrows, etc.). Then the received frame is normalized to a reference size in a step referenced 704, which delivers a normalized face frame. The step 704 is also similar to the step 504. Then, a step referenced 706 which consists in applying to the normalized face frame a deformation by taking into account the posture parameters as well as the morphing parameters (retrieved from a memory unit in a step referenced 707) is performed. Therefore, compared to the method described in the figure 5, the method from the figure 7 takes into account other parameters (the posture parameters). At least, a step, referenced 708, of projecting through the picoprojector of the communication device is performed.

In one embodiment of the invention, the step 701 to 708 are then executed for each received face frames.

In another embodiment, steps 703 to 706 can be gathered into one step, from a mathematical point of view.

Figure 8 presents a communication device comprising a picoprojector device which is connected to a display device according to one embodiment of the invention.

In such embodiment, the communication device displays through a screen of the communication device an image (or frame) or a sequence of frames that displays the body of the incoming caller (that is obtained through the camera of the incoming caller and transmitted through the network).

Figure 9 presents a device that can be used to perform one or several steps of the flowcharts of the Figures 3, 5 and 7, or other method disclosed in the present document.

Such device referenced 900 comprises a computing unit (for example a CPU, for *"Central Processing Unit"*), referenced 901, and one or several memory units (for example a RAM (for *"Random Access Memory"*) block in which intermediate results can be stored temporarily during the execution of instructions of a computer program, or a ROM (*"Read Only Memory"*) block in which, among other things, computer programs are stored, or an EEPROM (*"Electrically-Erasable Programmable Read-Only Memory"*) block, or a flash memory block) referenced 902. Computer programs are made of instructions that can be executed by the computing unit. Such device 900 can also comprise a dedicated unit, referenced 903, constituting an input-output interface to allow the device 900 to communicate with other devices. In particular, this dedicated unit 903 can be connected with an antenna (in order to perform communication without contacts), or with serial ports (to carry communications "contact"). Let's remark that the arrows in Figure 9 mean that the linked units can exchange data through buses for example together.

In an alternative embodiment, some or all of the steps of the method previously described, can be implemented in hardware in a programmable FPGA (*"Field Programmable Gate Array"*) component or ASIC (*"Application-Specific Integrated Circuit"*) component.

In an alternative embodiment, some or all of the steps of the method previously described, can be executed on an electronic device comprising memory units and processing units as the one disclosed in the Figure 9.

## Claims

1. Display device comprising a curved surface display, said display device being **characterized in that** it comprises coupling means enabling to couple said display device to at least one output of a projector device, said coupling means receiving, from said at least one output, at least one light beam of information to be displayed, said information to be displayed being adapted to a geometry of said curved surface display, and **in that** it comprises optical means enabling to guide said at least one light beam to said curved surface display.

2. Display device according to claim 1, **characterized in that** it comprises geometry data associated to said geometry of said curved surface display.

3. Display device according to any claims 1 to 2, **characterized in that** said curved surface display has a shape of a human face.

4. Display device according to any claims 1 to 3, **characterized in that** said optical means comprise a mirror.

5. Display device according to claim 4, **characterized in that** said optical means further comprise a lens.

6. Display device according to any claims 1 to 5, **characterized in that** said curved display surface is translucent.

7. Display device according to claim 6, **characterized in that** said translucent curved surface display has light scattering properties.

8. Display device according to any claims 1 to 7, **characterized in that** said information to be displayed represents a face of a human being.

9. Display device according to any claims 1 to 8, **characterized in that** said coupling means comprise a mechanical linkage enabling a movement of said display device with regards to said projector device.

10. Display device according to claim 9, **characterized in that** said mechanical linkage corresponds to a ball and socket joint.

11. Display device according to any claims 9 to 10, **characterized in that** said coupling means comprise at least one deflecting prism.

12. Device for adapting an information into an information to be displayed on a display device according to any claims 1 to 11, said device for adapting being **characterized in that** it comprises:
- means for obtaining an information of a geometry of said curved surface display;
- means for applying a geometric morphing to said information in function of said information on geometry, delivering an adapted information to be displayed.

13. Device according to claim 12, **characterized and in that** said means for obtaining comprise means for reading a barcode associated to said display device.

14. Device according to claim 12, **characterized in that** it comprises:
- means for detecting at least one feature point on said information delivering an at least one detected feature point;
means for moving a display position of said at least one detected feature point to an expected position where said at least one detected feature must be displayed, said means delivering said information of a geometry of said curved surface display.

15. Method for displaying data on a curved surface display, said method being **characterized in that** it comprises :
- a step of obtaining at least one frame corresponding to a face of a person;
- a step of applying a geometric morphing to said at least one frame in function of an information of geometry of said curved surface display, delivering at least one adapted frame to be displayed;
- a step of displaying said adapted frame onto the curved surface.
